# FASCICULE DE BREVET EUROPEEN

(11) **EP 0 582 525 B1**
(45) Date de publication et mention de la délivrance du brevet: **19.02.1997**
(21) Numéro de dépôt: 93420297.9
(22) Date de dépôt: 06.07.1993
(51) Int. Cl.: B42F 17/32, B42F 17/18, G09B 29/00

(54) **Support individuel pour fiche et tableau de classement incluant un tel support**
Halter für einzelne Karten und Wandtafel mit einem derartigen Halter
Unitary holder for a card and classing board including such a holder

(30) Priorité: 06.07.1992 FR 9208567
(43) Date de publication de la demande: 09.02.1994
(73) Titulaire: VAL-REX Société à Responsabilité Limitée:, F-84600 Valreas (FR)
(72) Inventeur: Clair, Pierre-Yves, F-19250 Meymac (FR)
(74) Mandataire: Thibault, Jean-Marc

(56) Documents cités:
- FR-A- 483 779
- FR-A- 1 187 285
- GB-A- 2 117 156
- US-A- 1 741 586

## Description

La présente invention concerne le domaine technique général des dispositifs conçus pour assurer le classement de feuilles, de cartes et d'une manière générale, de fiches organisées selon au moins une direction de classement, par exemple verticale, afin de constituer un tableau d'affichage destiné à former de préférence mais non exclusivement un tableau de planning.

L'invention trouve une application particulièrement avantageuse pour le classement de fiches en forme de T, composées chacune d'une plage de tête débordant de chaque côté du corps de la fiche appelé talon.

D'une manière classique, un tableau de classement de ce type est composé d'au moins une, et en général, de plusieurs colonnes verticales contiguës, comportant chacune une série de fentes superposées destinées à recevoir chacune une ou plusieurs fiches en forme de T. Ce type de tableau donne satisfaction pour la visualisation globale d'informations au sens général et procure ainsi un schéma synoptique d'un état ou d'une situation donnée dans le temps.

L'utilisation d'un tel tableau nécessite diverses manipulations des fiches en fonction de l'évolution de l'état ou de la situation qu'elles représentent ou schématisent. Il apparaît ainsi fréquemment le besoin d'intercaler ou de retirer une fiche. L'insertion ou la suppression d'une fiche impose de déplacer d'un cran, une par une, toutes les fiches situées, soit en aval, soit en amont de la position devant être prise par la fiche à insérer ou de la position occupée par la fiche à supprimer.

Afin d'éviter de telles manipulations, les brevets FR 1 187 285 et US 1 741 586 ont proposé de réaliser un tableau pour le classement de fiches destinées à être portées chacune par un support individuel engagé à ses deux extrémités dans des glissières de guidage en coulissement. Les supports de fiches se trouvent ainsi empilés selon une ou plusieurs colonnes.

Afin d'extraire une fiche d'une colonne, il convient de soulever et de maintenir la pile de supports situés au-dessus du support de fiche sélectionné et d'extraire ce support dont l'emplacement laissé vide se trouve immédiatement comblé par la descente par gravité de la pile de supports préalablement soulevés. L'insertion d'une fiche s'effectue d'une manière similaire en soulevant et en maintenant la pile de supports situés au-dessus de l'emplacement choisi, afin de dégager un espace libre pour l'engagement du support.

De telles manipulations s'avèrent, en pratique, relativement contraignantes, spécialement lorsque le tableau constitue un fichier à caractère évolutif nécessitant de nombreuses modifications de la position des fiches.

Pour tenter de remédier à cet inconvénient, le brevet d'invention FR 25 73 354 a proposé un dispositif comportant deux coulisses munies de crans, destinées à coopérer avec des supports de fiches constitués chacun par une barrette sur laquelle est fixée la fiche. Chaque barrette est destinée à venir s'engager dans un cran de la coulisse, tandis que la fiche est guidée par des ergots portés par les coulisses. L'insertion d'une barrette derrière une barrette inférieure portée par les crans de la coulisse, permet d'assurer le pivotement de cette dernière et son extraction des ergots. La barrette inférieure est chassée de son cran et chute vers un cran inférieur, entraînant par suite, le déplacement d'un cran, de tous les autres supports de fiche placés en aval.

Un tel dispositif permet, effectivement, d'obtenir un décalage automatique de toutes les fiches placées en aval d'une position choisie. Il apparaît, toutefois, en pratique, qu'un tel dispositif ne donne pas satisfaction.

En effet, l'utilisation de tels tableaux de classement a fait apparaître le besoin de disposer d'un support de fiche capable d'être immobilisé dans au moins certaines positions définies le long de la colonne de classement, indépendamment de la position et du nombre de supports placés dans la colonne, tout en offrant la capacité de permettre le déplacement automatique du ou des supports de fiches placés aussi bien en aval qu'en amont dudit support. Ainsi, il s'avère particulièrement avantageux de pouvoir, d'une part, placer une série de supports de fiches, chacun selon des coordonnées précises en abscisse et en ordonnée, différentes d'un support à l'autre, en laissant subsister, éventuellement, des espaces libres entre au moins certains des supports et, d'autre part, translater, par l'intermédiaire d'au moins un support déterminé, l'ensemble ou une partie seulement du ou des supports placés en aval ou en amont d'une position déterminée. Il apparaît ainsi possible de constituer, dans une colonne de classement, plusieurs piles ou secteurs de supports indépendants les uns des autres et formés chacun par un ou plusieurs supports de fiches.

La présente invention vise justement à satisfaire ce nouveau besoin en proposant un support individuel pour au moins une fiche, destiné à être guidé dans au moins une voie commune de guidage ménagée dans un tableau de classement adapté pour recevoir une série de supports individuels de fiches ordonnées selon une direction de classement, ledit support :
- étant équipé d'au moins un organe d'appui apte à transmettre un effort sur un organe analogue d'un support placé au moins en aval dudit organe, de manière à entrainer le déplacement du ou des supports placés en aval,
- comportant des moyens de guidage et d'immobilisation destinés à coopérer avec des moyens complémentaires portés par la voie de guidage, permettant de guider et d'immobiliser ledit support dans au moins certaines positions le long de la voie de guidage.

Selon l'invention, les moyens assurent, d'une part, un guidage en coulissement du support selon les deux sens de la direction de classement de la voie de guidage formant une voie de coulissement et, d'autre part, une immobilisation dudit support indépendamment de la position des autres supports, et l'organe d'appui est adapté pour transmettre un effort de poussée, selon les deux sens de la direction de classement, sur un organe d'appui d'un support placé en aval ou en amont dudit organe, de manière à entraîner le déplacement du ou des supports placés en aval ou en amont.

Selon une caractéristique avantageuse, les moyens de positionnement sont constitués par une structure aimantée dont l'un des éléments est formé par la voie de déplacement, tandis que l'autre élément est formé par chaque support de fiche.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue en perspective partielle d'un tableau pour le classement de supports de fiches conformes à l'invention.

La **fig. 2** est une vue en coupe transversale prise, sensiblement selon les lignes II-II de la **fig. 1**.

La **fig. 3** est une vue en perspective montrant un support de fiche conforme à l'invention.

La **fig. 4** est une coupe élévation prise, sensiblement selon les lignes IV-IV de la **fig. 1**.

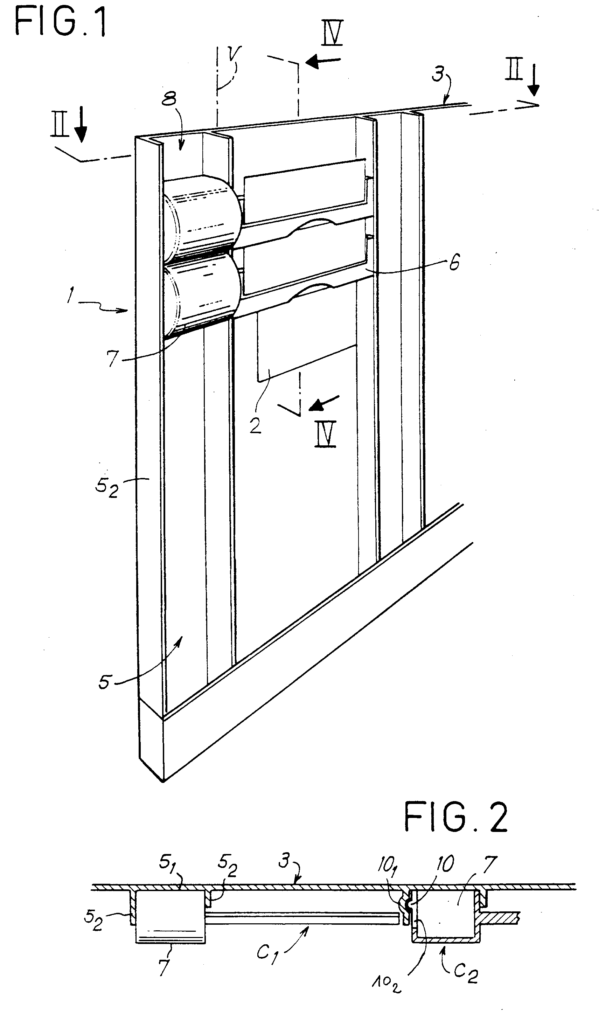

Tel que cela apparait plus précisément, aux **fig. 1** à **4**, le tableau **1** est destiné à assurer le classement de fiches **2** au sens général, de forme, de dimension et de nature diverses, en vue de constituer avantageusement, mais non exclusivement un tableau de planning. Dans l'exemple illustré, le tableau **1** est aménagé pour classer les fiches **2** d'une manière superposée selon une direction verticale **V**. Bien entendu, il peut être envisagé de classer les fiches selon une direction horizontale.

Le tableau **1** comporte d'une manière classique, une structure porteuse **3** ne faisant pas partie de l'objet de l'invention. Ladite structure **3** est apte à supporter des fiches **2** organisées pour constituer au moins une, et de préférence, une série de colonnes juxtaposées **C**_{**1**}, **C**_{**2**}**,...C**_{**i**}, de classement vertical des fiches. Chaque colonne de classement **C**_{**i**}, comporte au moins une voie **5** de guidage en coulissement, selon la direction **V**, d'une série de pièces **6** assurant chacune le support d'au moins une fiche **2**. La voie de guidage en coulissement **5** forme une glissière dans l'exemple illustré.

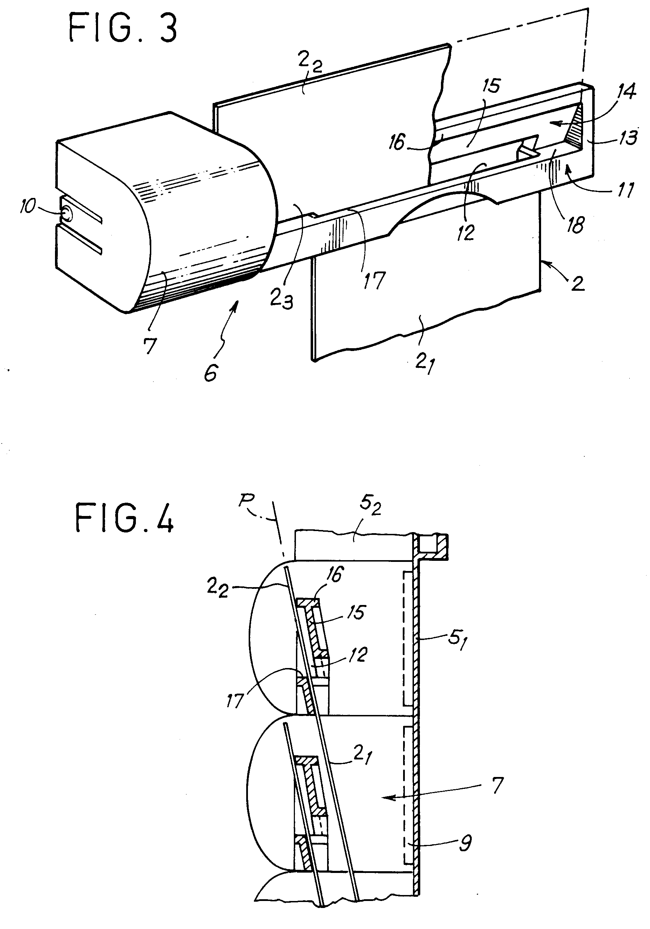

Selon l'invention, chaque support **6** est pourvu d'au moins un organe d'appui **7**, apte à transmettre un effort selon les deux sens de la direction de classement, sur un organe d'appui **7** d'un autre support **6** placé en aval ou en amont. Chaque support **6** comporte des moyens **8** assurant son guidage en coulissement sur la voie **5** et son immobilisation dans au moins certaines positions définies le long de la voie de glissement **5**. Dans l'exemple illustré, chaque support **6** comporte un organe d'appui **7** conformé pour présenter une partie de glissement coopérant avec la glissière **5**. Chaque organe d'appui **7** d'un support se trouve engagé à l'intérieur de la glissière **5** formée par une âme **5**_{**1**} à partir de laquelle s'étendent, selon une direction perpendiculaire, deux ailes **5**_{**2**} **(fig. 2)**. Dans l'exemple de réalisation illustré, les moyens **8** de guidage et d'immobilisation sont constitués aussi par un élément magnétique et par un élément apte à subir l'attraction de l'élément magnétique. Comme illustré, la voie de guidage **5** peut être réalisée en un matériau métallique tandis que chaque organe d'appui **7** est pourvu d'un aimant **9** porté par la face arrière de l'organe d'appui **7 (fig. 4)**. Bien entendu, il peut être envisagé de réaliser les organes d'appui **7** en un matériau métallique et d'équiper la voie **5** d'un ruban aimanté.

Chaque support **6** de fiche peut ainsi être placé individuellement dans une position précise tout le long de la voie de guidage **5**, indépendamment de la position et du nombre des supports placés dans la colonne de classement. Il est à noter que la mise en oeuvre d'une structure magnétique permet d'obtenir une immobilisation des supports dans toutes les positions possibles le long de la voie de coulissement **5**. L'insertion d'un support de fiche peut être facilement obtenu en déplaçant, soit dans le sens aval, soit dans le sens amont, l'organe d'appui **7** du support de fiche, placé respectivement dans une position adjacente inférieure ou supérieure à la position devant être occupée par la fiche à insérer. Le déplacement d'un support **6** adjacent amont ou aval permet de déplacer automatiquement tous les supports **6** placés respectivement en amont ou en aval, par la mise en butée de tous les organes d'appui 7, exerçant entre eux un effort de poussée. De même, l'espace laissé libre lors du retrait d'une fiche peut être facilement comblé, en déplaçant les fiches amont ou aval par l'intermédiaire de l'organe d'appui qui se trouve soit le plus éloigné lors de l'application d'un effort de poussée, soit dans une position adjacente lors de l'application d'un effort de traction. Dans certaines applications, il est avantageux de laisser des espaces libres entre un ou plusieurs supports **6** pour permettre l'insertion ultérieure de supports ou pour former des secteurs ou des piles auxiliaires de support.

Il est à noter que les moyens **8** peuvent être réalisés, pour la fonction de guidage, par l'intermédiaire d'une patte élastique portée par chaque support et réalisée, par exemple, en forme de T et engagée dans une voie de guidage formée par une fente et, en ce qui concerne la fonction d'immobilisation, à l'aide de moyens de blocage par obstacle rappelés élastiquement, tels que des doigts ou des billes, et destinés à coopérer avec des moyens complémentaires comme par exemple des cavités ou des dépressions. Les moyens élastiques de blocage et les moyens complémentaires sont portés respectivement ou inversement par les supports **6** et par la voie de coulissement **5**. Selon une autre variante de réalisation, les moyens de guidage et d'immobilisation **8** peuvent être constitués par un moyen de serrage tel qu'un étrier ou une pince porté par chaque support et dont l'une des branches est sollicitée élastiquement pour assurer un effort de serrage sur un rail ménagé sur le châssis du tableau. Bien entendu, il pourrait être envisagé que la pince se trouve montée sur le châssis du tableau et coopère avec des tronçons de rail portés par les supports **6**.

Dans la forme de réalisation relative à la mise en oeuvre de moyens de blocage par obstacle, il convient de noter que les moyens **8** assurent également une fonction d'indexation des supports **6** le long de la voie de coulissement **5**. D'une manière avantageuse, il peut être prévu de munir les supports **6** avec des moyens d'indexation, dans l'exemple de réalisation des moyens **8** sous la forme d'une structure magnétique. Ainsi, tel que cela apparaît aux **fig. 2** et **3**, l'organe d'appui **7** peut être équipé d'une languette élastique **10**_{**2**} découpée partiellement à partir de la face latérale extérieure de l'organe d'appui **7** et munie d'une saillie **10** destinée à coopérer avec une cavité complémentaire **10**_{**1**} portée par une aile **5**_{**2**} de la glissière. Ainsi, la glissière **5** est pourvue, à intervalles de préférence réguliers, de cavités **10**_{**1**} permettant un indexage ou un positionnement précis des supports **6** selon la direction verticale **V**.

Dans l'exemple de réalisation illustrée, chaque organe d'appui **7** est placé sur l'un des côtés du support **6**, selon une direction sensiblement perpendiculaire à la direction de classement **V**. Chaque support **6** se présente donc sous la forme d'une barrette **11** prolongée latéralement par un organe d'appui **7**. Dans cet exemple, chaque organe d'appui **7** constitue avantageusement un élément de manoeuvre ou de préhension. A cet effet, chaque organe d'appui **7** se présente sous la forme d'une pièce massive faisant saillie en partie frontale du tableau, par rapport à la voie de guidage **5**. Dans certaines applications, l'organe d'appui **7** peut servir de surface de support pour informations diverses.

Tel que cela ressort plus précisément de la **fig. 2**, les supports **6** peuvent être guidés du côté opposé à celui équipé de l'organe d'appui **7**, par l'aile **5**_{**2**} du guide **5** d'une colonne de classement adjacente. Bien entendu, il peut être prévu de munir les deux côtés latéraux des supports **6**, d'un organe d'appui **7** tel que décrit au-dessus, et coopérant chacun avec une voie de guidage **5**. Selon cette variante pour laquelle chaque support **6** est guidé sur ses deux côtés, les organes d'appui **7** peuvent présenter des dimensions réduites tandis qu'un élément de préhension ou de manoeuvre est réalisé sur la partie frontale du support.

Avantageusement mais non exclusivement, les supports **6** sont aménagés pour porter au moins une fiche **2** présentant une forme générale en T. Chaque fiche **2** comporte un talon **2**_{**1**} surmonté par une plage de tête **2**_{**2**} raccordée de part et d'autre du talon, par un épaulement **2**_{**3**}. Selon cette variante préférée, chaque support **6** se présente sous la forme d'une barrette **11** dans laquelle est réalisée au moins une fente **12** adaptée pour assurer le passage du talon **2**_{**1**} de la fiche. Chaque support **6** est aménagé pour assurer le maintien d'une fiche **2** dans une position stable inclinée selon un plan frontal de présentation **P (fig. 4)**. Selon cette position, la plage de tête **2**_{**2**} de la fiche se trouve placée en avant par rapport à son talon **2**_{**1**} pour un observateur placé devant le panneau. Le plan de présentation **P** des fiches est incliné par rapport à l'axe vertical **V**. Une telle inclinaison des fiches autorise le recouvrement du talon d'une fiche par un support inférieur **6**.

La hauteur de chaque organe d'appui **7** dans le sens de la direction **V** est avantageusement de l'ordre de la hauteur de la plage de tête **2**_{**2**} d'une fiche de manière à autoriser le contact entre les organes de poussée **7** sans abîmer les fiches, et tout en maximisant leur nombre dans une colonne.

Dans l'exemple illustré, la barrette **11** est aménagée pour comporter sur sa face frontale **13**, une enfonçure **14** présentant une dépouille **15** orientée de haut en bas, en laissant subsister un bord longitudinal **16** formant une butée haute pour la plage de tête **2**_{**2**} de la fiche. L'enfonçure **14** est prolongée en partie, par la fente **12** qui laisse subsister un méplat **17** sensiblement horizontal délimitant de part et d'autre de la fente **12**, un rebord **18** destiné à supporter un épaulement **2**_{**3**} d'une fiche. De préférence, la fente **12** s'ouvre dans la dépouille **15** et le méplat **17**, au niveau de leur ligne de jonction, de manière à favoriser l'introduction du talon à l'intérieur de la fente de passage **12**. Comme cela apparaît à la **fig. 4**, la fiche **2** est ainsi maintenue entre la butée haute **16** et le bord de la fente délimité par le méplat **17** permettant le maintien de la fiche dans le plan de présentation **P**.

## Revendications

1. Support individuel pour au moins une fiche **(2)**, destiné à être guidé dans au moins une voie commune de guidage **(5)** ménagée dans un tableau de classement **(1)** adapté pour recevoir une série de supports individuels **(6)** de fiches ordonnées selon une direction de classement **(V)**, ledit support **(6)**:
- étant équipé d'au moins un organe d'appui **(7)** apte à transmettre un effort sur un organe **(7)** analogue d'un support placé au moins en aval dudit organe, de manière à entrainer le déplacement du ou des supports placés en aval,
- comportant des moyens de guidage et d'immobilisation **(8)** destinés à coopérer avec des moyens complémentaires portés par la voie de guidage **(5)**, permettant de guider et d'immobiliser ledit support dans au moins certaines positions le long de la voie de guidage,
caractérisé :
- en ce que les moyens **(8)** assurent, d'une part, un guidage en coulissement du support selon les deux sens de la direction de classement **(V)** de la voie de guidage **(5)** formant une voie de coulissement et, d'autre part, une immobilisation dudit support indépendamment de la position des autres supports,
- et en ce que l'organe d'appui **(7)** est adapté pour transmettre un effort de poussée, selon les deux sens de la direction de classement **(V)**, sur un organe d'appui d'un support placé en aval ou en amont dudit organe, de manière à entraîner le déplacement du ou des supports placés en aval ou en amont.

2. Support selon la revendication 1, caractérisé en ce que les moyens **(8)** d'immobilisation du support sont constitués par une structure aimantée composée d'un élément magnétique **(9)** et d'un élément apte à subir l'attraction de l'élément magnétique, l'un et l'autre de ces éléments étant formés respectivement ou inversement par la voie de coulissement **(5)** et le support **(6)**.

3. Support selon la revendication 1, caractérisé en ce que les moyens **(8)** d'immobilisation du support sont constitués par des moyens de blocage par obstacle rappelés élastiquement et coopérant avec des moyens complémentaires permettant d'assurer, également, une indexation du support, les moyens de blocage et les moyens complémentaires étant portés respectivement ou inversement par le support et par la voie de coulissement.

4. Support selon la revendication 1, caractérisé en ce que les moyens **(8)** d'immobilisation du support **(6)** sont constitués par des moyens de serrage coopérant avec un rail ou un tronçon de rail, les moyens de serrage et le rail ou le tronçon étant portés respectivement ou inversement par le support et la structure porteuse **(3)** du tableau.

5. Support selon la revendication 1 ou 2, caractérisé en ce qu'il est équipé de moyens d'indexation **(10**_{**2**}**, 10)** du support à des positions déterminées le long de la voie de coulissement.

6. Support selon l'une des revendications 1 à 5, caractérisé en ce qu'il est formé par une barrette **(11)** prolongée sur l'un au moins de ses côtés par l'organe d'appui **(7)** aménagé pour constituer un élément de préhension ou de manoeuvre guidé en coulissement et équipé partiellement des moyens d'immobilisation **(8)**.

7. Support selon la revendication 6, caractérisé en ce que la barrette **(11)** présente au moins une fente **(12)** pour le passage **(2**_{**1**}**)** d'une fiche en forme de T.

8. Support selon la revendication 7, caractérisé en ce que la barrette **(11)** comporte une enfonçure **(14)** présentant une dépouille **(15)** prolongée en partie par la fente **(12)** et laissant subsister une butée haute **(16)** pour la plage de tête de la fiche et une butée basse délimitée par la fente **(12)** et un méplat **(17)** de l'enfonçure, les butées basse et haute permettant de maintenir la fiche traversant la fente dans une position stable inclinée selon un plan de présentation frontal **(P)**, pour lequel la plage de tête **(2**_{**2**}**)** est placée en avant par rapport au talon **(2**_{**1**}**)** de la fiche.

9. Support selon la revendication 1 ou 6, caractérisé en ce que l'organe d'appui **(7)** présente une hauteur dans la direction de classement sensiblement de l'ordre de la hauteur de la plage de tête **(2**_{**2**}**)** d'une fiche.

10. Tableau de classement, caractérisé en ce qu'il comporte au moins une voie **(5)** de guidage en coulissement pour au moins un support **(6)** de fiche conforme à l'une des revendications 1 à 9.

11. Tableau de classement selon la revendication 10, caractérisé en ce que chaque voie de guidage **(5)** comporte des moyens complémentaires aux moyens **(8)** de guidage et d'immobilisation équipant les supports individuels **(6)** des fiches.

## Claims

1. An individual support for at least one card (2) that is to be guided along at least one common guide track (5) formed in a classification board (1) adapted to receive a series of individual card supports (6) ordered in a classification direction (V), said support (6) :
• being fitted with at least one thrust member (7) suitable for transmitting a force to an analogous member (7) of a support placed at least downstream from said member so as to entrain displacement of the support(s) placed downstream; and
• including guidance and locking means (8) designed to co-operate with complementary means carried by the guide track (5), enabling said support to be guided and locked in at least certain positions along the guide track;
characterized:
• in that the means (8) serve firstly to guide the support in sliding in both classification directions (V) along the guide track (5) which forms a sliding track, and secondly to lock said support independently of the position of the other supports; and
• in that the thrust member (7) is adapted to transmit a thrust force in both classification directions (V) to a thrust member of a support placed downstream or upstream from said member so as to entrain displacement of the support(s) placed downstream or upstream.

2. A support according to claim 1, characterized in that the support locking means (8) are constituted by a magnetized structure made up of a magnetic element (9) and an element suitable for being attracted to the magnetic element, said elements being formed respectively by the sliding track (5) and the support (6), or vice versa.

3. A support according to claim 1, characterized in that the support locking means (8) are constituted by means for locking with a resiliently biased obstacle and co-operating with complementary means also serving to index the support, the locking means and the complementary means being carried respectively by the support and by the sliding track, or vice versa.

4. A support according to claim 1, characterized in that the support locking means (8) are constituted by clamping means co-operating with a rail or a length of rail, the clamping means and the rail or length of rail being carried respectively by the support (6) and the structure (3) of the board, or vice versa.

5. A support according to claim 1 or 2, characterized in that it is fitted with indexing means (10₂, 10) for indexing the support in determined positions along the sliding track.

6. A support according to any one of claims 1 to 5, characterized in that it is formed by a strip (11) extended from at least one of its sides by the thrust member (7) which is organized to constitute a drive or grasping element that is guided in sliding and fitted with part of the locking means (8).

7. A support according to claim 6, characterized in that the strip (11) is in the form of a slot (12) through which a T-shaped card can pass (2₁).

8. A support according to claim 7, characterized in that the strip (11) includes a depression (14) having a slope (15) extended in part by the slot (12) and leaving a high abutment (16) for the head area of the card and a low abutment defined by the slot (12) and a flat (17) of the depression, the low and high abutments serving to hold the card passing through the slot in a stable position that is inclined relative to a front presentation plane (P), in which the head area (2₂) is placed in front of the stub (2₁) of the card.

9. A support according to claim 1 or 6, characterized in that the thrust member (7) presents a height in the classification direction that is substantially of the same order as the height as the head area (2₂) of a card.

10. A classification board characterized in that it includes at least one sliding guide track (5) for at least one card support (6) according to any one of claims 1 to 9.

11. A classification board according to claim 10, characterized in that each guide track (5) includes means that are complementary to the guidance and locking means (8) fitted to the individual card supports (6).

## Patentansprüche

1. Einzelhalter für mindestens einen Zettel bzw. eine Karte (2), der dazu bestimmt ist, in mindestens einer gemeinsamen Führungsbahn (5) geführt zu werden, die in einer Einordnungstafel (1) ausgebildet ist, die dazu eingerichtet ist, eine Reihe von Karten-Einzelhaltern (6) aufzunehmen, die längs einer Einordnungdsrichtung (V) geordnet sind, wobei der genannte Halter (6):
- mindestens mit einem Anlageorgan (7) ausgestattet ist, das dazu eingerichtet ist, eine Kraft auf ein analoges Organ (7) eines Halters zu übertragen, der mindestens dem genannten Organ vorausgehend angeordnet ist, um derart die Verlagerung des oder der Halter(s) zu betreiben, der bzw. die vorausgehend angeordnet ist bzw. sind, und
- Mittel zur Führung und Festlegung (8) aufweist, die dazu bestimmt sind, mit komplementären Mitteln zusammenzuwirken, die von der Führungsbahn (5) getragen sind, und es gestatten, den genannten Halter mindestens in bestimmten Lagen längs der Führungsbahn zu führen und festzulegen,
dadurch gekennzeichnet,
- daß die Mittel (8) einerseits eine Gleitführung des Halters beidsinnig in der Einordnungsrichtung (V) der Führungsbahn (5), die eine Gleitbahn bildet, und anderer-seits eine Festlegung des genannten Halters unabhängig von der Lage der anderen Halter sicherstellen, und
- daß das Anlageorgan (7) dazu eingerichtet ist, eine Schubkraft beidsinnig in der Einordnungsrichtung (V) auf ein Anlageorgan eines Halters zu übertragen, der dem genannten Organ vorausgehend oder nachfolgend angeordnet ist, um derart die Verlagerung des oder der Halter zu betreiben, der bzw. die vorausgehend oder nachfolgend angeordnet ist bzw. sind.

2. Halter nach Anspruch 1, dadurch gekennzeichnet, daß die Mittel (8) zur Festlegung des Halters von einem magnetischen Aufbau gebildet sind, der aus einem magnetischen Element (9) und einem Element zusammengesetzt ist, das dazu geeignet ist, die Anziehung des magnetischen Elements zu erfahren, wobei das eine bzw. das andere dieser Elemente von der Gleitführung (5) und dem Halter (6) oder umgekehrt gebildet ist.

3. Halter nach Anspruch 1, dadurch gekennzeichnet, daß die Mittel (8) zur Festlegung des Halters von Mitteln zur Blockierung durch ein Hindernis gebildet sind, die elastisch zurückgestellt sind und mit komplementären Mitteln zusammenwirken, die es gestatten, ebenfalls eine Verriegelung des Halters sicherzustellen, wobei die Blockierungsmittel bzw. die komplementären Mittel vom Halter und von der Gleitbahn oder umgekehrt getragen sind.

4. Halter nach Anspruch 1, dadurch gekennzeichnet, daß die Mittel (8) zur Festlegung des Halters (6) von Klemm-Mitteln gebildet sind, die mit einer Schiene oder einem Schienenabschnitt zusammenwirken, wobei die Klemm-Mittel bzw. die Schiene oder der Abschnitt vom Halter und dem Tragaufbau (3) der Tafel oder umgekehrt getragen sind.

5. Halter nach Anspruch 1 oder 2. dadurch gekennzeichnet, daß er mit Mitteln zur Verriegelung (10₂, 10) des Halters an bestimmten Stellen längs der Gleitbahn ausgestattet ist.

6. Halter nach einem der Ansprüche 1 bis 5, dadurch gekennzeichnet, daß er von einem Steg (11) gebildet ist, der auf mindestens einer seiner Seiten durch das Anlageorgan (7) verlängert ist, das dazu eingerichtet ist, ein Greif- oder Betätigungsorgan zu bilden, das gleitgeführt ist und teilweise mit Mitteln zur Festlegung (8) ausgestattet ist.

7. Halter nach Anspruch 6, dadurch gekennzeichnet, daß der Steg (11) mindestens einen Schlitz (12) für den Durchtritt (2₁) einer T-förmigen Karte darbietet.

8. Halter nach Anspruch 7, dadurch gekennzeichnet, daß der Steg (11) eine Vertiefung (14) aufweist, die eine Schräge (15) darbietet, die teilweise durch den Schlitz (12) verlängert ist, und eine hohe Auflage (16) für den Kopfbereich der Karte sowie eine niedrige Auflage stehenläßt, die durch den Schlitz (12) und eine Abflachung (17) der Vertiefung begrenzt ist, wobei die niedrige und hohe Auflage es gestatten, die Karte, die durch den Schlitz hindurchläuft, in einer stabilen Lage zu halten, die längs einer frontalen Darbietungsebene (P) geneigt ist, in welcher der Kopfbereich (2₂) gegenüber dem unteren Teil (2₁) der Karte nach vorne versetzt ist.

9. Halter nach Anspruch 1 oder 6, dadurch gekennzeichnet, daß das Anlageorgan (7) in der Einordnungsrichtung eine Höhe im wesentlichen in der Größenordnung der Höhe des Kopfbereiches (2₂) einer Karte darbietet.

10. Einordnungstafel, dadurch gekennzeichnet, daß sie mindestens eine Gleitführungsbahn (5) für mindestens einen Kartenhalter (6) in Übereinstimmung mit einem der Ansprüche 1 bis 9 aufweist.

11. Einordnungstafel nach Anspruch 10, dadurch gekennzeichnet, daß jede Führungsbahn (5) Mittel aufweist, die komplementär sind zu den Mitteln (8) zur Führung und Festlegung, die die Karten-Einzelhalter (6) ausstatten.
